# EUROPÄISCHE PATENTSCHRIFT

(11) **EP 0 496 051 B1**
(45) Veröffentlichungstag und Bekanntmachung des Hinweises auf die Patenterteilung: **04.09.1996**
(21) Anmeldenummer: 91119592.3
(22) Anmeldetag: 16.11.1991
(51) Int. Cl.: H04N 7/32, H04N 5/14

(54) **Verfahren zur Ermittlung von Bewegungsvektoren für die Übertragung von digitaler Bildinformation**
Method of determining motion vectors for the transmission of digital picture information
Méthode pour estimer des vecteurs de mouvement en vue de la transmission d'information d'images digitales

(30) Priorität: 19.01.1991 DE 4101490
(43) Veröffentlichungstag der Anmeldung: 29.07.1992
(73) Patentinhaber: ROBERT BOSCH GMBH, 70442 Stuttgart (DE)
(72) Erfinder: Kummerow, Thomas, Dr.-Ing., W-6293 Wehrheim (DE); Mohr, Peter, Dipl.-Ing., W-6270 Idstein 4 (DE)

(56) Entgegenhaltungen:
- WO-A-88/00784
- SIGNAL PROCESSING IMAGE COMMUNICATION Bd. 3, Nr. 1, Februar 1991, AMSTERDAM, NE Seiten 57 - 69 , XP234780 ROLF P. LOOS ET AL. 'HYBRID CODING WITH PRE-BUFFERING AND PRE-ANALYSIS IN A SOFTWARE-BASED CODEC ENVIREMENT'
- IEEE TRANSACTIONS ON CONSUMER ELECTRONICS Bd. 36, Nr. 3, August 1990, NEW YORK, US, Seiten 510-519, XP 162883 KENYA UOMORI ET AL: "AUTOMATIC IMAGE STABILIZING SYSTEM BY FULL-DIGITAL SIGNAL PROCESSING"
- IEEE International Conference on Communications, Philadelphia, US, 13.-17. Juni 1982, Seiten 2G.7.1-2G.7.5, Franz May et al.: 'PICTURE CODING WITH MOTION ANALYSIS FOR LOW RATE TRANSMISSION'
- 2nd International Techn. Symposium on Optical and Electro-Optical Applications Science and Engineering SPIE Conference, Band 594, Cannes, FR; Dezember 1985, Seiten 119-128, G. Kummerfeld et al.: 'Coding Television Signals at 320 and 64 kbit/s'
- FREQUENZ Bd. 42, Nr. 8, August 1988, BERLIN, DE Seiten 217 - 222 , XP36532 KARLHEINZ GROTZ ET AL. 'A Combination of DPCM and Motion-Compensated Frame Interpolation for the Encoding of 34Mbit/s Colour TV Signals (Part I)'

## Beschreibung

Die Erfindung betrifft ein Verfahren zur Ermittlung von Bewegungsvektoren für die Übertragung von digitaler Bildinformation mit niedriger Bitrate nach dem Oberbegriff des Patentanspruchs 1. Ein solches Verfahren ist bekannt aus 2nd International Techn. Symposium on Optical an Electro.-Optical Applications Science an Engineering SPIE Conference, Band 594, Cannes, FR; Dezember 1985, Seiten 119-128, G. Kummerfeld et al.: '_Coding Television Signals at 320 and 64 kbit/s'.

In der DE-Fachzeitschrift "Frequenz", 43 (1989) 3 ist ab Seite 86 ein Aufsatz abgedruckt mit dem Titel: "Codierung von farbigen Bewegtbildzenen mit 64 kbit/s - Ein neuer Ansatz zur Verwirklichung eines Bildtelefons im ISDN". Dieser Aufsatz wird fortgesetzt im Heft 4 ab Seite 98 und im Heft 5 ab Seite 126.

In diesem Aufsatz wird ausführlich beschrieben, auf welche Weise beim Empfänger eine annehmbare Bildqualität erreicht werden kann, obwohl die Bitrate des Übertragungskanals nur 64 kbit/s beträgt. Wie in dem auf Seite 87 beginnenden Abschnitt 2 (Grundlagen der Bewegtbildcodierung) angegeben ist, wird in zeitlicher Richtung eine DPCM-Schleife eingesetzt. Die Differenzen zwischen einem Schätzbild und einem aktuellen Bild werden codiert und zum Empfänger übertragen. Dabei spielen Bewegungsvektoren eine wesentliche Rolle.

In dem auf Seite 88 beginnenden Abschnitt 3 wird erläutert, welche Operationen notwendig sind, um einen Bewegungsvektor zu ermitteln. Daraus geht hervor, daß relativ umfangreiche Berechnungen notwendig sind, um für jedes Teilbild die Bewegungsvektoren zu ermitteln. Deshalb ist es sinnvoll, nur diejenigen Bildsegmente oder Bildblöcke bei der Bewegungsvektorberechnung herauszugreifen, die auch tatsächlich eine nennenswerte Bewegung aufweisen. Hierzu ist auf Seite 93 im Abschnitt 3.2.4 erwähnt, daß "in die Berechnung nur Blöcke einbezogen werden, die zum bewegten Vordergrund gehören". Die Genauigkeit der Schätzung oder Berechnung von Bewegungsvektoren hängt außerdem stark davon ab, wie die einzelnen Blöcke, in die ein Bild zur Bewegungsvektorberechnung eingeteilt ist, beschaffen sind. Hierzu heißt es auf Seite 129 (Frequenz, Heft S von 1989), daß Blöcke, die eine Kante beinhalten oder eine starke Struktur aufweisen unkritisch sind, weil dabei die ermittelte Verschiebung mit minimalem Restfehler mit der tatsächlichen Bewegung übereinstimmt. Es ist also zweckmäßig, Bildblöcke herauszufinden, bei welchen sich ein möglichst genauer Bewegungsvektor ergibt, wenn bei derartigen Blöcken eine Bewegung festgestellt wird.

Wenn bei der Bewegungsvektorschätzung jedesmal alle Bildblöcke, in die ein zu übertragendes Bild unterteilt ist, bearbeitet werden müssen, so entsteht ein hoher Rechenaufwand, welcher nicht in beliebig kurzer Zeit abgewickelt werden kann. Auch dann, wenn nur die bewegten Teile eines Bildes zur Ermittlung der Bewegungsvektoren herangezogen werden, können möglicherweise lange Rechenzeiten entstehen, wenn sich die betreffenden Bildblöcke nicht besonders gut zur eindeutigen Erkennung der Bewegungsrichtung und des Bewegungsbetrages eignen.

Bei dem aus vorgenanntem Conference Paper bekannten Verfahren wird zur Ermittlung von Bewegungsvektoren für die Bildübertragung eine Strukturanalyse von Bildblöcken durchgeführt, indem die digital gespeicherten Luminanz-Informationen innerhalb eines Bildblockes miteinander verglichen werden, um festzustellen, ob der betreffende Bildblock Strukturen aufweist, die für die Ermittlung von Bewegungsvektoren besonders geeignet sind.

Die Aufgabe der Erfindung besteht darin, ein Verfahren anzugeben, mit dem es möglich ist, eine hohe Qualität der Bewegungsvektoren bei geringem Rechenaufwand zu erreichen. Dabei soll möglichst schnell auf diejenigen Bildblöcke zugegriffen werden können, welche eine Bewegung aufweisen und für die Ermittlung von genauen Bewegungsvektoren besonders geeignet sind.

Diese Aufgabe wird durch die Merkmalskombination gemäß Patentanspruch 1 gelöst.

Damit wird in vorteilhafter Weise erreicht, daß Bewegungsvektoren mit hoher Genauigkeit entstehen, so daß die Restfehler gering sind, wodurch auf der Empfängerseite eine hohe Bildqualität zu erwarten ist.

Mit der Ausgestaltung nach Anspruch 4 ist eine besonders schnelle und genaue Ermittlung von Bewegungsvektoren ohne umfangreiche Berechnung möglich.

Ein Ausführungsbeispiel der Erfindung wird nachfolgend anhand von Zeichnungen näher erläutert.
Es zeigt
- Fig. 1: ein Blockschaltbild zur Durchführung des Verfahrens,
- Fig. 2: die schematische Darstellung eines in Blöcken aufgeteilten Bildes.

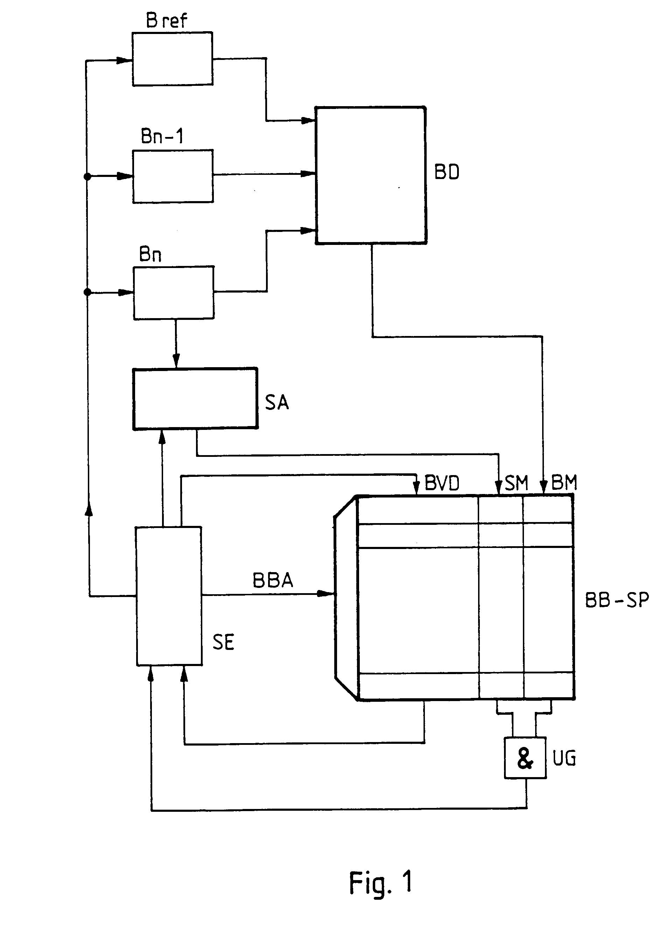

In der Fig. 1 sind mehrere Bildspeicher Bref, Bn-1 und Bn dargestellt. Der Referenzbildspeicher Bref enthält die Daten eines gesendeten Bildes. Die beiden anderen Speicher Bn und Bn-1 enthalten jeweils die Daten der Originalbilder von der Kamera, wobei der Inhalt des Speichers Bn dem aktuellen Bild entspricht und der Inhalt des Speichers Bn-1 das vorherige Kamerabild wiedergibt. Dieses Bildspeicher Bref, Bn-1 und Bn können auch als Teilbereiche in einem Gesamtbildspeicher ausgebildet sein.

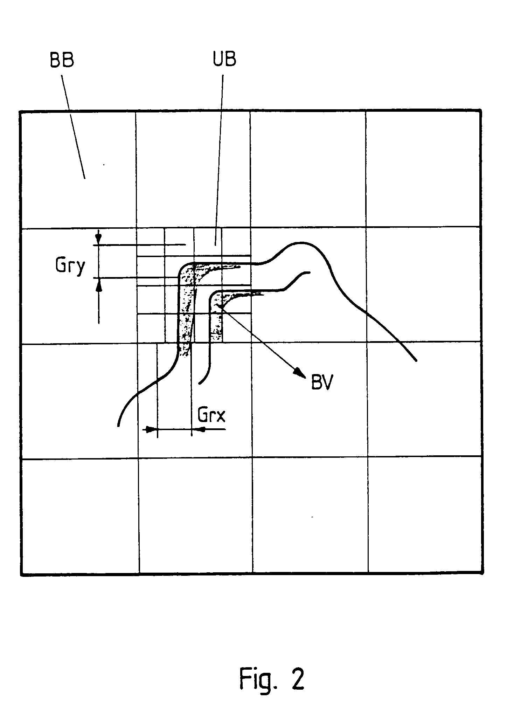

Die Ausgänge der genannten Bildspeicher sind mit einem Bewegungsdetektor BD verbunden. Von einer Steuereinrichtung SE wird jeweils veranlaßt, daß die Inhalte der Bildspeicher Bref, Bn-1 und Bn miteinander verglichen werden. Dabei werden die Gesamtbilder in Bildblöcke BB aufgeteilt, wie dies in Fig. 2 dargestellt ist. Es wird nun ein blockweiser Vergleich innerhalb des Bewegungsdetektors BD durchgeführt, wobei Unterschiede festgestellt werden. Wenn sich beim Vergleich von Bildblökken BB Unterschiede ergeben, die ein vorbestimmtes Maß überschreiten, so gibt der Bewegungsdetektor an seinem Ausgang eine Bewegungsmarkierung BM ab. Mit Hilfe der Steuereinrichtung SE wird nun diese Bewegungsmarkierung BM in einen Bildblockspeicher BB-SP eingetragen. Dabei werden Bildblockadressen BBA gebildet, so daß auf den eine Bewegungsmarkierung BM aufweisenden Bildblock zugegriffen werden kann.

Jedes von einer nicht dargestellten Kamera aufgenommene Bild, welches im Bildspeicher Bn vorübergehend abgelegt worden ist, wird durch eine Strukturanalyseeinrichtung SA blockweise auf Helligkeitsunterschiede, welche Strukturen darstellen, untersucht. Dabei werden innerhalb eines jeden Bildblockes BB Unterblöcke UB gebildet, wie dies in Fig. 2 angedeutet ist. Innerhalb eines jeden Unterblockes wird festgestellt, ob Luminanz-Unterschiede vorhanden sind. Dabei werden sowohl in horizontaler Richtung als auch in vertikaler Richtung Luminanz-Gradienten Grx und Gry bestimmt. Diese Werte können mit einer Schwelle verglichen werden, so daß nur signifikante Unterschiede erkannt werden. Wenn die Luminanz-Gradienten sowohl in horizontaler Richtung Grx als auch in vertikaler Richtung Gry ausreichend hohe Werte aufweisen, so gibt die Strukturanalyseeinrichtung SA eine Strukturmarkierung SM ab. Diese Strukturmarkierung SM wird mit Hilfe der Steuereinrichtung SE in den bereits erwähnten Bildblockspeicher BB-SP eingetragen. Diese Strukturmarkierung SM bleibt jedoch bei der Ermittlung von Beweungsvektoren BV unberücksichtigt, wenn nicht auch eine Bewegungsmarkierung BM für den gleichen Bildblock BB eingetragen ist. Die bisher beschriebenen Analysemaßnahmen für die Bewegung und zur Ermittlung von für die Bewegungsvektorschätzung geeigneten Bildblöcken BB werden durchgeführt, bevor die Berechnung der Bewegungsvektoren BV beginnt. Für die Berechnung von Bewegungsvektoren BV wird der Bildblockspeicher BB-SP ausgelesen, und dabei festgestellt, welche Bildblöcke BB sowohl eine Bewegungsmarkierung BM als auch eine Strukturmarkierung SM aufweisen. Nur solche Bildblöcke BB werden zunächst bei der Ermittlung der Bewegungsvektoren BV bearbeitet. Die dabei ermittelten Daten, d. h. beispielsweise die Koordinaten und die Absolutwerte, werden ebenfalls in den Bildblockspeicher BB-SP eingetragen, damit sie für einen späteren Vergleich von Bewegungsvektoren BV zur Verfügung stehen. Erst danach werden auch die nur eine Bewegungsmarkierung BM aufweisenden Bildblöcke BB bearbeitet. Dabei können die bereits ermittelten Bewegungsvektoren BV derjenigen Bildblöcke BB, die sowohl eine Bewegungsmarkierung BM als auch eine Strukturmarkierung SM aufweisen zur vereinfachten Ermittlung der Bewegungsvektoren BV herangezogen werden, wenn es sich um benachbarte Bildblöcke BB handelt. Bereits ermittelte Bewegungsvektoren BV, welche im Bildblockspeicher BB-SP eingespeichert sind, können außerdem zur Ermittlung hypothetischer Bewegungsvektoren BV dienen, womit eine vereinfachte Berechung von aktuellen Bewegungsvektoren BV möglich ist.

Der Bildblockspeicher BB-SP enthält für jeden der Bildblöcke BB einen Speicherbereich, beispielsweise eine Zeile, wo die den Bildblock BB beschreibenden Daten eingeschrieben sind. Dazu gehören die bereits beschriebenen Strukturmarkierungen SM und Bewegungsmarkierungen BM. Außerdem ist noch Speicherkapazität vorgesehen für die Eintragung von Bewegungsvektordaten BVD. Dabei handelt es sich um die Koordinatenangaben von Bewegungsvektoren BV und deren Betragsgröße. Bei der Ermittlung von neuen Bewegungsvektoren BV werden, wie dies bereits beschrieben worden ist, zunächst nur solche Bildblöcke BB bearbeitet, die sowohl eine Bewegungsmarkierung BM als auch eine Strukturmarkierung SM aufweisen. Das Vorhandensein der beiden genannten Markierungen BM und SM wird mit einem UND-Gatter UG erkannt. Der Steuereinrichtung SE stehen dann die im Bildblockspeicher BB-SP vorhandenen Bewegungsvektordaten BVD solcher Bildblöcke BB zur Verfügung. Die Bewegungsvektordaten BVD werden bei jeder neuen Ermittlung aktualisiert. Außerdem wird für jeden Bildblockspeicher BB-SP erneut festgestellt, ob eine Bewegungsmarkierung BM und/oder eine Strukturmarkierung SM einzutragen ist. Wenn sich dabei herausstellt, daß die für eine Eintragung solcher Markierungen BM und SM notwendige Schwelle nicht überschritten wird, so werden keine Markierungen eingetragen. Dies hat zur Folge, daß auch die zugehörigen Bewegungsvektordaten BVD auf Null gesetzt werden. Somit stehen der Steuereinrichtung SE bei jeder neuen Ermittlung von Bewegungsvektoren BV die zu einem Bildblock BB gehörenden Daten zur Verfügung, die bereits vorher ermittelt worden sind.

Die Bewegungsvektordaten BVD der relevanten Bildblöcke BB dienen auch dazu, hypothetische Bewegungsvektoren zu ermitteln. Dabei werden auch die Bewegungsvektoren BV von Nachbarblöcken berücksichtigt. Mit Hilfe eines hypothetischen Bewegungsvektors BV kann ein Bildblock BB so verschoben werden, daß er mit dem entsprechenden Bildblock BB des aktuellen Bildes Bn verglichen werden kann. Dabei kann festgestellt werden, inwieweit der hypothetische Bewegungsvektor BV mit der tatsächlichen Bewegung übereinstimmt. Die sich dabei ergebenden Differenzen werden miteinander verglichen und es wird derjenige Bewegungsvektor BV als der Richtige erkannt, dessen Differenzwert am niedrigsten ist und unterhalb eines vorgegebenen Schwellwertes liegt. Mit einem derartigen Verfahren zum Ermitteln von Bewegungsvektoren BV werden erhebliche Einsparungen an Rechenzeit erzielt. Die so ermittelten Bewegungsvektoren BV können dann bei anderen benachbarten Bildblöcken BB zugrunde gelegt werden, so daß deren Bewegungsvektoren BV nach einem vereinfachten Verfahren berechenbar sind. Nur dann, wenn der Vergleich von mit hypothetischen Bewegungsvektoren BV versetzten Bildblöcken BB nicht zu einem Ergebnis führt, d. h. wenn kein Differenzwert gefunden werden kann, der unterhalb des Schwellwertes liegt, müssen herkömmliche Methoden, z. B. die 3-Schritt-Methode angewendet werden. Insgesamt ergibt sich aber, daß eine hohe Genauigkeit von Bewegungsvektoren BV für eine gute Bildqualität erreicht wird, wobei erhebliche Einsparungen an Rechenzeit erreicht werden.

## Patentansprüche

1. Verfahren zur Ermittlung von Bewegungsvektoren für die Übertragung von digitaler Bildinformation mit niedriger Bitrate, wobei nur die Information über die zwischen den einzelnen Bildern bestehenden Unterschiede gesendet wird und zu diesem Zweck auf der Sendeseite ermittelt wird, an welchen Stellen ein Bild Bewegungen aufweist, indem ein Vergleich eines neu zu sendenen Bildes mit einem bereits gesendeten Bild stattfindet, wobei das Bild in Blöcke aufgeteilt wird und wobei eine Strukturanalyse der Bildblöcke durchgeführt wird, indem die digital gespeicherten Luminanz-Informationen innerhalb eines Bildblockes miteinander verglichen werden, um festzustellen, ob der betreffende Bildblock Strukturen aufweist, die für die Ermittlung von Bewegungsvektoren besonders geeignet sind,
dadurch gekennzeichnet,
daß die Änderungen gegenüber dem vorherigen Bild aufweisenden Bildblöcke (BB) innerhalb eines Bildblockspeichers (BB-SP) mit einer Bewegungsmarkierung (BM) versehen werden, daß für die Strukturanalyse der Bildblöcke (BB) die digital gespeicherten Luminanz-Informationen innerhalb eines Bildblockes (BB) in horizontaler und vertikaler Richtung miteinander verglichen werden, daß Bildblöcke (BB), die Strukturen aufweisen, innerhalb des Bildblockspeichers (BB-SP) mit einer Strukturmarkierung (SM) versehen werden,-
und daß bei der Ermittlung der Bewegungsvektoren (BV) zunächst nur solche Bildblöcke (BB) bearbeitet werden, die eine Bewegungsmarkierung BM und eine Strukturmarkierung (SM) aufweisen, und erst dann die nur eine Bewegungsmarkierung (BM) aufweisenden Bildblöcke (BB) behandelt werden.

2. Verfahren nach Anspruch 1,
dadurch gekennzeichnet,
daß zur Ermittlung der Luminanz-Unterschiede innerhalb eines Bildblockes (BB) eine Aufteilung in einzelne Unterblöcke (UB) vorgenommen wird, wobei ermittelt wird, an welchen Stellen in horizontaler und vertikaler Richtung die größten Helligkeitsunterschiede auftreten,
und daß solche Bildblöcke bevorzugt markiert werden, die eine scharfe Ecke oder ähnliche Struktur aufweisen, d. h. in horizontaler und vertikaler Richtung Helligkeitsunterschiede haben.

3. Verfahren nach Anspruch 2,
dadurch gekennzeichnet,
daß innerhalb eines jeden Unterblockes (UB) ein Luminanz-Gradient in horizontaler Richtung (Grx) und einer in vertikaler Richtung (Gry) bestimmt wird, und daß diese Werte der Steilheit mit in die Strukturmarkierung (SM) einbezogen werden.

4. Verfahren nach einem der Ansprüche 1 bis 3
dadurch gekennzeichnet,
daß zunächst hypothetische Bewegungsvektoren (BV) unter Berücksichtigung des vorherigen Bewegungsvektors (BV) des gleichen Bildblockes (BB) und der bereits berechneten Bewegungsvektoren (BV) der Nachbarblöcke des aktuellen Bildes (Bn) ermittelt werden,
daß dann jeweils ein punktweiser Vergleich eines Bildblockes (BB) des aktuellen Bildes (Bn) mit dem entsprechenden, um den hypothetischen Bewegungsvektor (BV) versetzten Bildblock (BB) im vorherigen Bild (Bn-1) durchgeführt wird,
daß aus den zuvor ermittelten hypothetischen Bewegungsvektoren (BV) jener als der die Bewegung eines Bildblockes (BB) beschreibende richtige Bewegungsvektor erkannt wird, dessen beim punktweisen Vergleich ermittelter Differenzwert am niedrigsten ist und unter einem vorgegebenen Schwellwert liegt,
und daß nach Abschluß der Bewegungsvektorberechnung für die Bildblöcke (BB), die eine Bewegungsmarkierung und eine Strukturmarkierung aufweisen, die Bewegungsvektoren (BV) anderer Bildblöcke (BB), die nur eine Bewegungsmarkierung (BM) aufweisen, nach einem vereinfachten Verfahren ermittelt werden, wobei die ermittelten Bewegungsvektoren (BV) anderer benachbarter Bildblöcke zugrunde gelegt werden.

5. Verfahren nach Anspruch 4,
dadurch gekennzeichnet,
daß Bewegungsvektoren nach einem bekannten Verfahren unter Einbeziehung großer Bildbereiche ermittelt werden, wenn mit Hilfe der hypothetischen Bewegungsvektoren (BV) kein Differenzwert gefunden werden konnte, der unterhalb des Schwellwertes liegt.

## Claims

1. Method of determining motion vectors for the transmission of digital picture information at a low bit rate, only the information concerning the differences existing between the individual pictures being transmitted and for this purpose it being determined, at the transmitting end, at which locations a picture has movements, in that a picture which is to be newly transmitted is compared with a picture which has already been transmitted, the picture being divided into blocks and a structure analysis of the picture blocks being carried out, in that the digitally stored luminance information items within a picture block are compared with one another in order to ascertain whether the relevant picture block has structures which are particularly suitable for determining motion vectors, characterized in that those picture blocks (BB) which have changes compared with the previous picture are provided with a motion marking (BM) inside a picture block memory (BB-SP), in that, for the structure analysis of the picture blocks (BB), the digitally stored luminance information items within a picture block (BB) in the horizontal and vertical directions are compared with one another, in that picture blocks (BB) which have structures are provided with a structure marking (SM) inside the picture block memory (BB-SP), and in that when the motion vectors (BV) are determined, first of all only those picture blocks (BB) which have a motion marking BM and a structure marking (SM) are processed, and not until then are the picture blocks (BB) which have only a motion marking (BM) dealt with.

2. Method according to Claim 1, characterized in that, in order to determine the luminance differences within a picture block (BB), a division into individual sub-blocks (UB) is carried out, it being determined at which locations in the horizontal and vertical directions the greatest brightness differences occur, and in that those picture blocks are preferably marked which have a sharp corner or similar structure, that is to say have brightness differences in the horizontal and vertical directions.

3. Method according to Claim 2, characterized in that a luminance gradient in the horizontal direction (Grx) and one in the vertical direction (Gry) are determined within each sub-block (UB), and in that these gradient values are included in the structure marking (SM).

4. Method according to one of Claims 1 to 3, characterized in that hypothetical motion vectors (BV) are first of all determined, taking account of the previous motion vector (BV) of the same picture block (BB) and the already calculated motion vectors (BV) of the neighbouring blocks of the current picture (Bn), in that a point-by-point comparison of a picture block (BB) of the current picture (Bn) with the corresponding picture block (BB), offset by the hypothetical motion vector (BV), in the previous picture (Bn-1) is then carried out in each case, in that that motion vector of the previously determined hypothetical motion vectors (BV) which is identified as the correct motion vector describing the motion of a picture block (BB) is the one whose difference value, determined during the point-by-point comparison, is the lowest and lies below a predetermined threshold value, and in that after the conclusion of the motion vector calculation for the picture blocks (BB) which have a motion marking and a structure marking, the motion vectors (BV) of other picture blocks (BB), which have only a motion marking (BM), are determined by a simplified method, the determined motion vectors (BV) of other neighbouring picture blocks being taken as a basis.

5. Method according to Claim 4, characterized in that motion vectors are determined by a known method incorporating large picture areas if the use of the hypothetical motion vectors (BV) has been unsuccessful in finding a difference value which lies below the threshold value.

## Revendications

1. Procédé pour déterminer des vecteurs de mouvement en vue de la transmission d'informations d'images numériques avec un faible taux de bit, en n'envoyant les informations que dans les intervalles existant entre les différentes images et en déterminant dans ce but, du côté de l'émission, à quels endroits une image présente des mouvements, en procédant à une comparaison entre une image nouvelle à émettre et une image déjà émise, l'image étant divisée en blocs et une analyse de la structure des blocs d'images étant effectuée, en comparant, les unes aux autres, les informations relatives à leur luminance mises numériquement en mémoire à l'intérieur d'un bloc d'images, pour déterminer si le bloc d'images concerné présente des structures qui sont particulièrement appropriées à la détection de vecteurs de mouvement,
caractérisé en ce qu'
on affecte aux blocs d'images (BB), qui présentent des modifications par rapport à l'image précédente à l'intérieur d'une mémoire de blocs d'images (BB-SP), un repère de mouvement (BM),
pour l'analyse structurelle des blocs d'images (BB), on compare, les unes aux autres, les informations, relatives à la luminance, mises en mémoire numériquement, d'un bloc d'images (BB), dans le sens horizontal et dans le sens vertical,
on affecte aux blocs d'images (BB), qui présentent des structures, un repère de structure (SM) à l'intérieur de la mémoire de blocs d'images (SM) et
lors de la détermination des vecteurs de mouvement (BV), on traite d'abord seulement les blocs d'images (BB) qui présentent un repère de mouvement (BM) et un repère de structure (SM) et on ne traite alors que les blocs d'images qui présentent un repère de mouvement (BM).

2. Procédé selon la revendication 1,
caractérisé en ce que
pour déterminer les différences de luminance à l'intérieur d'un bloc d'images (BB) on procède à une division en différents sous-blocs (UB), en déterminant les endroits où se produisent, dans le sens horizontal et dans le sens vertical, les différences de luminosité les plus grandes et
on affecte de préférence des repères à ceux des blocs d'images qui présentent un angle pointu ou une structure analogue, c'est-à-dire qui ont des différences de luminosité dans le sens horizontal et dans le sens vertical.

3. Procédé selon la revendication 2,
caractérisé en ce que
à l'intérieur de chaque sous-bloc (UB), on détermine un gradient de luminance dans le sens horizontal (Grx) et un autre dans le sens vertical (Gry) et
les valeurs de la pente sont incorporées en même temps dans le repère de structure (SM).

4. Procédé selon l'une des revendications 1 à 3,
caractérisé en ce qu'
on détermine tout d'abord des vecteurs de mouvement hypothétiques (BV) en prenant en considération le vecteur de mouvement précédent (BV) du même bloc d'images (BB) et les vecteurs de mouvement déjà calculés (BV) des blocs voisins de l'image actuelle (Bn),
on effectue ensuite une comparaison ponctuelle d'un bloc (BB) de l'image actuelle (Bn) avec ce bloc d'image (BB) décalé du vecteur de mouvement hypothétique (BV) à l'image précédente (Bn-1),
à partir des vecteurs d'images hypothétiques déterminés auparavant (BV), on considère comme le vecteur de mouvement correct décrivant le mouvement d'un bloc d'images (BB), celui dont la valeur différentielle déterminée lors de la comparaison ponctuelle est la plus basse et se trouve en dessous d'une valeur de seuil, et
après avoir fini le calcul des vecteurs de mouvement pour les blocs d'images (BB) qui présentent un repère de mouvement et un repère de structure, on détermine les vecteurs de mouvement (BV) d'autres blocs d'images (BB) qui ne présentent qu'un repère de mouvement (BM), selon un procédé simplifié en se basant sur les vecteurs de mouvement déterminés (BV) d'autres blocs d'images voisins.

5. Procédé selon la revendication 4,
caractérisé en ce que,
selon un procédé connu, on détermine des vecteurs de mouvement en incorporant de grandes zones d'images quand, à l'aide des vecteurs hypothétiques de mouvement (BV), on n'a pas pu trouver de valeur différentielle qui tombe au-dessous de la valeur de seuil.
